(19) Europäisches Patentamt / European Patent Office / Office européen des brevets

(11) **EP 3 167 993 A1**

(12) **EUROPEAN PATENT APPLICATION**
published in accordance with Art. 153(4) EPC

(43) Date of publication:
**17.05.2017 Bulletin 2017/20**

(51) Int Cl.:
***B23K 20/12*** (2006.01)

(21) Application number: **15819413.4**

(22) Date of filing: **09.06.2015**

(86) International application number:
**PCT/JP2015/066554**

(87) International publication number:
**WO 2016/006377 (14.01.2016 Gazette 2016/02)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **10.07.2014 JP 2014142351**

(71) Applicant: **Sumitomo Electric Industries, Ltd.**
**Osaka-shi, Osaka 541-0041 (JP)**

(72) Inventors:
- **UTSUMI, Yoshiharu**
  **Itami-shi**
  **Hyogo 664-0016 (JP)**
- **AOYAMA, Hiroka**
  **Itami-shi**
  **Hyogo 664-0016 (JP)**
- **TSUDA, Keiichi**
  **Itami-shi**
  **Hyogo 664-0016 (JP)**

(74) Representative: **Grünecker Patent- und Rechtsanwälte**
**PartG mbB**
**Leopoldstraße 4**
**80802 München (DE)**

(54) **ROTARY TOOL AND WELDING METHOD**

(57)    A spot friction welding tool (1) is for performing spot friction welding of a first member and a second member by superposing the first member and the second member and pressing the spot friction welding tool (1) against the first member and the second member from the first member side. Each of the first member and the second member is a steel plate having a tensile strength of not lower than 590 MPa. The spot friction welding tool (1) is rotatable around a rotation axis (4). The spot friction welding tool (1) includes a column (2) having a shoulder (5) at a tip end thereof, and a cylindrical or truncated conical probe (3) protruding from the shoulder (5) in a direction of extension of the rotation axis (4). When t (mm) represents a thickness of the second member and a second member insertion volume V (mm$^3$) represents a volume of the probe (3) inserted into the second member at the time of pressing the spot friction welding tool (1) against the first member and the second member, a relationship between V and t satisfies a following equation (1):

$$V \geq 2.75t^2 + 8.19t - 4.19 \ (t \geq 0.5 \ mm) \cdots (1).$$

FIG.1

**Description**

TECHNICAL FIELD

The present invention relates to a spot friction welding tool and a joining method using the same.

BACKGROUND ART

In recent years, as a joining method for joining two or more thin plates, a joining method called "Spot Friction Welding" or "Friction Spot Joining" has been devised in, for example, Japanese Patent Laying-Open No. 2001-314982 (hereinafter, PTD 1) and the practical use of the joining method in a motor vehicle body and the like has started. This technique utilizes the frictional heat generated by pressing a cylindrical tool having a small-diameter protrusion (called "probe" or "pin") at a tip end thereof against a joined spot while rotating the cylindrical tool, and the frictional heat causes softening and plastic flow of metal materials at the joined spot, to thereby join the metal materials.

Unlike resistance spot welding that is currently the mainstream of a joining method for a motor vehicle body, spot friction welding is a technique for joining members to be joined in a solid-phase state without melting the members to be joined. Therefore, spot friction welding allows joining at a low temperature. Thus, spot friction welding has advantages over resistance spot welding, such as no occurrence of spatters or fumes at a joined spot, little deformation of members to be joined, low power consumption, and being capable of joining different types of materials.

An attempt to obtain a higher-strength joint by improving a joining tool for performing spot friction welding (hereinafter also denoted as "spot friction welding tool") is proposed in, for example, Japanese Patent Laying-Open No. 2009-131891 (hereinafter, PTD 2). PTD 2 describes that the use of a spot friction welding tool including a probe having a non-circular (e.g., triangular and the like) cross-sectional shape makes it possible to increase the stir efficiency during joining, to prevent formation of a non-joined region called "hook line" in a vertical direction in a stir region, and to increase the joining strength.

In addition, Japanese Patent Laying-Open No. 2013-086175 (hereinafter, PTD 3) describes the following about a spot friction welding tool including a truncated conical probe. The spot friction welding tool is designed such that an angle which a side surface of the probe forms with a rotation axis, a height of the probe, and a thickness of a steel plate through which the probe passes satisfy a certain relational equation. As a result, a cross tensile load applied to a joined spot is increased, expansion of a non-joined region caused by hooking is suppressed, and the joining strength is increased.

The spot friction welding tool has already been applied to joining of aluminum alloys that have a low softening temperature and are easy to stir, and application of the spot friction welding tool to a manufacturing line of a motor vehicle body is expanding.

CITATION LIST

PATENT DOCUMENT

PTD 1: Japanese Patent Laying-Open No. 2001-314982
PTD 2: Japanese Patent Laying-Open No. 2009-131891
PTD 3: Japanese Patent Laying-Open No. 2013-086175

SUMMARY OF INVENTION

TECHNICAL PROBLEM

Steel has a high hardness even at a high temperature and is more difficult to plastically flow than soft metals such as an aluminum alloy, and thus, it is difficult to obtain a wide stir region. In addition, a non-joined region called "hook line" occurs at an interface formed by superposing steel plates. Therefore, it is difficult to obtain a high joining strength when joining steel plates (particularly high-tensile steel plates) by spot friction welding.

In spot friction welding of steel plates, using a spot friction welding tool including a probe having a non-circular cross-sectional shape to thereby increase the joining strength as described in PTD 2 is conceivable. However, since the cross-sectional shape of the probe is non-circular, the cross-sectional shape of the probe has a corner portion. Therefore, in the spot friction welding tool, chipping and wear are likely to occur due to a load applied to the above-described corner portion (corner portion of the cross-sectional shape of the probe), and there is a possibility that sufficient durability of the probe is not ensured.

In addition, as described above, PTD 3 describes that a shape of the probe is specified and a relationship between the probe and the members to be joined is defined to thereby increase the joining strength. However, in PTD 3, an index of the joining strength is the cross tensile load. Therefore, a tensile shear load that is a more important index of the joining strength is not taken into account.

Specifically, as to mechanical properties of a joint of steel plates and the like, grades are defined in JIS Z 3140: 1989 based on the tensile shear load. Therefore, the tensile shear load is appropriate as an index of the joining strength of the joint of the steel plates. However, a spot friction welding tool having sufficient durability and allowing formation of a joint of steel plates having a high tensile shear load required for the joint has not yet been provided.

Accordingly, an object of the present invention is to provide a spot friction welding tool in which a high tensile shear load is obtained in joining of steel plates.

SOLUTION TO PROBLEM

A spot friction welding tool according to one embodiment of the present invention is for performing spot friction welding of a first member and a second member by superposing the first member and the second member and pressing the spot friction welding tool against the first member and the second member from the first member side. Each of the first member and the second member is a steel plate having a tensile strength of not lower than 590 MPa. The spot friction welding tool is rotatable around a rotation axis. The spot friction welding tool includes a column having a shoulder at a tip end thereof, and a cylindrical or truncated conical probe protruding from the shoulder in a direction of extension of the rotation axis. When t (mm) represents a thickness of the second member and a second member insertion volume $V$ (mm$^3$) represents a volume of the probe inserted into the second member at the time of pressing the spot friction welding tool against the first member and the second member, a relationship between $V$ and $t$ satisfies a following equation (1):

$$V \geq 2.75t^2 + 8.19t - 4.19 \ (t \geq 0.5 \ \text{mm}) \cdots (1).$$

A joining method according to one embodiment of the present invention is a joining method for performing spot friction welding of a first member and a second member by superposing the first member and the second member and pressing a spot friction welding tool against the first member and the second member from the first member side. The joining method according to one embodiment of the present invention includes a pressing step of superposing the first member and the second member and pressing the spot friction welding tool against the first member and the second member from the first member side. Each of the first member and the second member is a steel plate having a tensile strength of not lower than 590 MPa. The spot friction welding tool is rotatable around a rotation axis. The spot friction welding tool includes a column having a shoulder at a tip end thereof, and a cylindrical or truncated conical probe protruding from the shoulder in a direction of extension of the rotation axis. The pressing step is a step of joining the first member and the second member by inserting the probe to a depth deeper in a thickness direction of the second member than a contact surface of the first member and the second member, while rotating the spot friction welding tool around the rotation axis. When t (mm) represents a thickness of the second member and a second member insertion volume $V$ (mm$^3$) represents a volume of the probe inserted into the second member in the pressing step, a relationship between $V$ and $t$ satisfies a following equation (1):

$$V \geq 2.75t^2 + 8.19t - 4.19 \ (t \geq 0.5 \ \text{mm}) \cdots (1).$$

ADVANTAGEOUS EFFECTS OF INVENTION

According to the foregoing, a high tensile shear load is obtained in joining of steel plates.

BRIEF DESCRIPTION OF DRAWING

Fig. 1 is a schematic cross-sectional view showing one example of a spot friction welding tool according to one embodiment of the present invention.
Fig. 2 is a schematic cross-sectional view showing a state in which a probe has been inserted most deeply at the time of pressing, when a first member and a second member are joined using the spot friction welding tool according to one embodiment of the present invention.

Fig. 3 is a correlation diagram showing a relationship between a thickness t of a steel plate serving as a member to be joined, and tensile shear loads $F_1$ and $F_2$ (kN) of a joint required to be recognized as a JIS A-grade minimum value and a JIS A-grade average value based on a definition in JIS Z 3140: 1989, respectively, when a joint is formed using steel plates each having a tensile strength of not lower than 590 MPa.

Fig. 4 is a correlation diagram showing a relationship between a second member insertion volume V and a tensile shear load F of a joint, which is obtained by an experiment of forming a joint of steel plates using the spot friction welding tool.

DESCRIPTION OF EMBODIMENTS

[Description of Embodiment of the Present Invention]

First, an embodiment of the present invention will be listed and described in [1] to [12] below.

[1] A spot friction welding tool according to one embodiment of the present invention is for performing spot friction welding of a first member and a second member by superposing the first member and the second member and pressing the spot friction welding tool against the first member and the second member from the first member side. Each of the first member and the second member is a steel plate having a tensile strength of not lower than 590 MPa. The spot friction welding tool is rotatable around a rotation axis. The spot friction welding tool includes a column having a shoulder at a tip end thereof, and a cylindrical or truncated conical probe protruding from the shoulder in a direction of extension of the rotation axis. When t (mm) represents a thickness of the second member and a second member insertion volume V ($mm^3$) represents a volume of the probe inserted into the second member at the time of pressing the spot friction welding tool against the first member and the second member, a relationship between V and t satisfies a following equation (1):

$$V \geq 2.75t^2 + 8.19t - 4.19 \ (t \geq 0.5 \ \text{mm}) \cdots (1).$$

As a result, a high tensile shear load is obtained in joining of steel plates.

[2] Preferably, the relationship between the second member insertion volume V ($mm^3$) and the thickness t (mm) of the second member satisfies a following equation (2):

$$V \geq 3.25t^2 + 9.62t - 4.48 \ (t \geq 0.5 \ \text{mm}) \cdots (2).$$

As a result, a higher tensile shear load is obtained in joining of steel plates.

[3] Preferably, each of the first member and the second member is a steel plate having a tensile strength of not lower than 980 MPa. In resistance spot welding, spatters are likely to occur at a joined spot. In addition, when the steel plate having a tensile strength of not lower than 980 MPa is used, it is difficult to obtain a high tensile shear load. However, when the spot friction welding tool of the present invention is used, a high tensile shear load can be obtained without the occurrence of spatters.

[4] Preferably, the probe includes a side surface continuous to the shoulder. Preferably, the side surface has an angle θ of not less than 0° and not more than 15° with respect to the rotation axis. As a result, a load required to insert the probe into the members to be joined can be reduced. In addition, the spot friction welding tool of the present invention is suited as a tool for applying a sufficient surface pressure to the first member through the shoulder.

[5] Preferably, when h (mm) represents a depth of insertion of the probe into the second member, a ratio h/t between the h and the thickness t (mm) of the second member is not lower than 0.25 and not higher than 0.75. As a result, the above-described equation (1) or the above-described equation (2) is satisfied without a probe tip end diameter and a hooking height increasing excessively.

[6] Preferably, the probe includes a side surface continuous to the shoulder. Preferably, the shoulder has a mortar-like dented shape from an outer edge thereof to a portion intersecting with the side surface. As a result, it is possible to prevent the first member and the second member pushed out by the probe from overflowing from the shoulder during joining by pressing. Therefore, a better outer appearance of the formed joined portion is obtained. In addition, since the outer edge of the shoulder holds down the first member, vibration of the spot friction welding tool during joining can be prevented.

[7] A joining method according to one embodiment of the present invention is a joining method for performing spot friction welding of a first member and a second member by superposing the first member and the second member and pressing a spot friction welding tool against the first member and the second member from the first member side. The joining method according to one embodiment of the present invention includes a pressing step of superposing the first member and the second member and pressing the spot friction welding tool against the first member and the second member from the first member side. Each of the first member and the second member is a steel plate having a tensile strength of not lower than 590 MPa. The spot friction welding tool is rotatable around a rotation axis. The spot friction welding tool includes a column having a shoulder at a tip end thereof, and a cylindrical or truncated conical probe protruding from the shoulder in a direction of extension of the rotation axis. The pressing step is a step of joining the first member and the second member by inserting the probe to a depth deeper in a thickness direction of the second member than a contact surface of the first member and the second member, while rotating the spot friction welding tool around the rotation axis. When t (mm) represents a thickness of the second member and a second member insertion volume V (mm$^3$) represents a volume of the probe inserted into the second member in the pressing step, a relationship between V and t satisfies a following equation (1):

$$V \geq 2.75t^2 + 8.19t - 4.19 \ (t \geq 0.5 \text{ mm}) \cdots (1).$$

As a result, a high tensile shear load is obtained in joining of steel plates.

[8] Preferably, the relationship between the second member insertion volume V (mm$^3$) and the thickness t (mm) of the second member satisfies a following equation (2):

$$V \geq 3.25t^2 + 9.62t - 4.48 \ (t \geq 0.5 \text{ mm}) \cdots (2).$$

As a result, a higher tensile shear load is obtained in joining of steel plates.

[9] Preferably, each of the first member and the second member is a steel plate having a tensile strength of not lower than 980 MPa. In resistance spot welding, spatters are likely to occur at a joined spot. In addition, when the steel plate having a tensile strength of not lower than 980 MPa is used, it is difficult to obtain a high tensile shear load. However, when the spot friction welding tool of the present invention is used, a high tensile shear load can be obtained without the occurrence of spatters.

[10] Preferably, the probe includes a side surface continuous to the shoulder. Preferably, the side surface has an angle $\theta$ of not less than 0° and not more than 15° with respect to the rotation axis. As a result, a load required to insert the probe into the members to be joined can be reduced. In addition, a sufficient surface pressure can be applied to the first member through the shoulder.

[11] Preferably, when h (mm) represents a depth of insertion of the probe into the second member, a ratio h/t between the h and the thickness t (mm) of the second member is not lower than 0.25 and not higher than 0.75. As a result, the above-described equation (1) or the above-described equation (2) is satisfied without a probe tip end diameter and a hooking height increasing excessively.

[12] Preferably, the probe includes a side surface continuous to the shoulder. Preferably, the shoulder has a mortar-like dented shape from an outer edge thereof to a portion intersecting with the side surface. As a result, it is possible to prevent the first member and the second member pushed out by the probe from overflowing from the shoulder during joining by pressing. Therefore, a better outer appearance of the formed joined portion is obtained. In addition, since the outer edge of the shoulder holds down the first member, vibration of the spot friction welding tool during joining can be prevented.

[Details of Embodiment of the Present Invention]

The embodiment of the present invention will be described in more detail below with reference to the drawings.

<Spot Friction Welding Tool>

A spot friction welding tool of the embodiment of the present invention (hereinafter also denoted as "present embodiment") is for performing spot friction welding of a first member and a second member by superposing the first member and the second member and pressing the spot friction welding tool against the first member and the second member from the first member side. Each of the first member and the second member is a steel plate having a tensile strength of not lower than 590 MPa. The spot friction welding tool is rotatable around a rotation axis. The spot friction welding tool includes a column having a shoulder at a tip end thereof, and a cylindrical or truncated conical probe protruding from the shoulder in a direction of extension of the rotation axis. When t (mm) represents a thickness of the second member and a second member insertion volume V ($mm^3$) represents a volume of the probe inserted into the second member at the time of pressing the spot friction welding tool against the first member and the second member, a relationship between V and t satisfies a following equation (1):

$$V \geq 2.75t^2 + 8.19t - 4.19 \ (t \geq 0.5 \ mm) \cdots (1).$$

As long as the spot friction welding tool of the present embodiment includes the above-described configuration, the spot friction welding tool of the present embodiment may include other configurations. Examples of the other configurations can include various types of coating films formed on a surface of the spot friction welding tool, and the like.

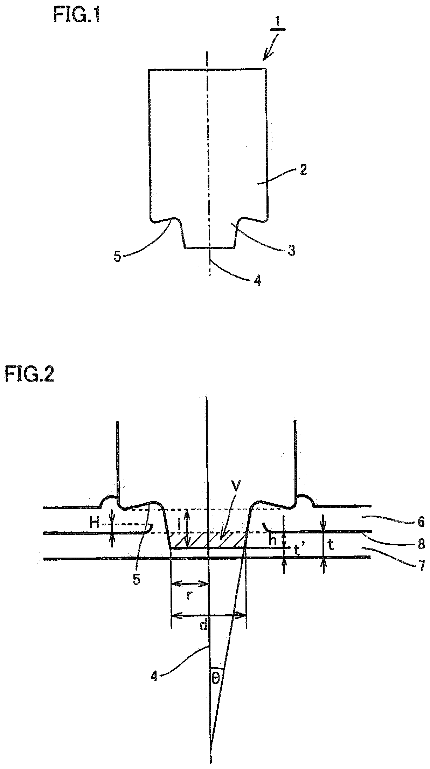

Fig. 1 is a schematic cross-sectional view of the spot friction welding tool of the present embodiment. A spot friction welding tool 1 of the present embodiment is rotatable around a rotation axis 4 shown in Fig. 1. "Rotation axis" herein refers to an axis around which the spot friction welding tool rotates. Furthermore, spot friction welding tool 1 of the present embodiment includes at least a column 2 having a shoulder 5 at a tip end thereof, and a cylindrical or truncated conical probe 3 protruding from shoulder 5 in a direction of extension of rotation axis 4. In the present embodiment, unless otherwise specified, "spot friction welding tool" refers to a spot friction welding tool having at least the above-described column and the above-described probe.

The components will be described in further detail below.

(Column)

Spot friction welding tool 1 of the present embodiment includes column 2 having shoulder 5 at the tip end thereof. "Shoulder" herein refers to a surface of the tip end portion of the column, which has the below-described probe at a central portion.

Probe 3 preferably includes a side surface continuous to shoulder 5, and shoulder 5 preferably has a mortar-like dented shape from an outer edge thereof to a portion intersecting with the side surface of probe 3. "Side surface of the probe" herein refers to a surface corresponding to a side surface of the cylindrical or truncated conical outer shape (i.e., cylinder or truncated cone) of the probe. In addition, "outer edge" herein refers to an outer circumference of the surface forming the shoulder in the column having the shoulder.

Since shoulder 5 has the above-described shape (mortar-like dented shape from the outer edge of shoulder 5 to the portion intersecting with the side surface of probe 3), it is possible to prevent a first member 6 and a second member 7 (hereinafter, both or one of first member 6 and second member 7 may be simply denoted as "member(s) to be joined") pushed out by probe 3 from overflowing from shoulder 5 during pressing. Therefore, a better outer appearance of the formed joined portion is obtained. In addition, since the outer edge of shoulder 5 holds down the member to be joined (e.g., first member 6), vibration of spot friction welding tool 1 during pressing can be prevented.

An area of shoulder 5 is preferably not smaller than 50 $mm^2$ and not larger than 70 $mm^2$. As a result, a surface pressure applied to the member to be joined through shoulder 5 during pressing is sufficiently increased. Therefore, a gap is less likely to be formed between the members to be joined. The area of shoulder 5 is more preferably not smaller than 55 $mm^2$ and not larger than 65 $mm^2$.

(Probe)

Spot friction welding tool 1 of the present embodiment includes cylindrical or truncated conical probe 3 protruding from shoulder 5 in the direction of extension of rotation axis 4. "Truncated conical" herein refers to a shape obtained by removing, from a cone, a cone sharing a vertex with the cone and scaled down in analogous shape. In addition, "circle" of the "cylindrical" and "truncated conical" shapes is not necessarily limited to a true circle and includes a substantial circle. Furthermore, "probe" refers to a portion that is inserted into the first member and the second member to stir the members to be joined at the time of pressing, and refers to a protruding portion of the spot friction welding tool. In spot friction welding tool 1, probe 3 has a cylindrical or truncated conical shape. Therefore, probe 3 has a circular cross-sectional shape, and thus, does not have a corner portion. Thus, in spot friction welding tool 1, there is no possibility that chipping and wear occur due to a load applied to the corner portion of probe 3. As a result, great durability is ensured.

Fig. 2 is a schematic cross-sectional view showing a state in which probe 3 has been inserted most deeply at the time of pressing, when first member 6 (member to be joined) and second member 7 (member to be joined) are joined by pressing, using spot friction welding tool 1 of the present embodiment. Although Fig. 2 shows the state in which probe 3 has been inserted most deeply, the present embodiment is not limited thereto. The present embodiment may have any states, as long as probe 3 is inserted to a depth deeper in a thickness direction of second member 7 than a contact surface 8 of first member 6 and second member 7 at the time of pressing. In Fig. 2, a probe tip end radius r and a probe length l are determined as appropriate to adjust second member insertion volume V at the time of pressing as described below, and are not particularly limited. For example, when steel plates each having a thickness of 1.2 mm are joined, probe tip end radius r is preferably not less than 1.9 mm and not more than 2.6 mm, and probe length l is preferably not shorter than 2.0 mm and not longer than 2.4 mm. As a result, a higher tensile shear load can be obtained. "Probe tip end radius r" herein refers to a radius of a tip end surface (i.e., circle) of the probe. In addition, "probe length l" refers to a distance between the tip end surface of the probe and a surface including a line where the side surface of the probe intersects with the shoulder, assuming that these surfaces are parallel to each other.

In the present embodiment, probe 3 preferably includes a side surface continuous to shoulder 5, and the side surface preferably has an angle θ of not less than 0° and not more than 15° with respect to rotation axis 4. "Angle θ" herein refers to an angle at which a straight line of extension of the side surface of the probe intersects with a straight line of extension of the rotation axis in a cross section including the rotation axis of the spot friction welding tool. "Angle θ" corresponds to θ in Fig. 2. Hereinafter, this angle θ will also be denoted as "probe taper angle θ". As described above, angle θ is preferably not less than 0° and not more than 15°. When angle θ is more than 15°, in a probe cross section (circular shape) which corresponds to the surface including the line where the side surface of the probe intersects with the shoulder and which has a surface perpendicular to the rotation axis as a cross section, a diameter of the circular shape may become larger. Therefore, a load required to insert the probe into the members to be joined may become too high. In addition, when angle θ is more than 15°, the area of the shoulder may become relatively smaller. Therefore, the surface pressure applied to the first member through the shoulder may become lower, and thus, a gap may be formed between the first member and the second member.

When angle θ is not less than 0° and not more than 15°, the load required to insert probe 3 into the members to be joined can be suppressed. In addition, a sufficient surface pressure can be applied to first member 6 through shoulder 5. Angle θ is more preferably not less than 5° and not more than 10°.

In the present embodiment, a groove may be formed in the side surface of probe 3. In addition, probe 3 may include an inclined surface (so-called chamfered surface) cut obliquely from the tip end surface of probe 3 to the side surface of probe 3. "Tip end surface of the probe" herein refers to a circular surface located at the tip end of the probe in the direction of extension of the rotation axis. When probe 3 has the above-described shape, the stirring force of spot friction welding tool 1 can be further increased.

In addition, probe 3 may be round chamfered with respect to a region where the tip end surface of probe 3 intersects with the side surface of probe 3. As a result, chipping is less likely to occur at the tip end of probe 3 during pressing.

(Material of Spot Friction Welding Tool)

In the present embodiment, as a material of spot friction welding tool 1, materials conventionally known as materials of various types of joining tools such as, for example, a spot friction welding tool or a friction stir welding tool can be used without any particular limitation. Examples of the material of spot friction welding tool 1 can include, for example, cemented carbide (e.g., WC-based cemented carbide, and "WC-based cemented carbide" described above includes cemented carbide containing WC and Co or Ni and cemented carbide containing carbonitride or the like of Ti, Ta, Nb or the like in addition to WC and Co or Ni), cermet (mainly composed of TiC, TiN, TiCN or the like), high-speed steel, tool steel, ceramics (such as titanium carbide, silicon carbide, silicon nitride, aluminum nitride, aluminum oxide, sialon, or a mixture thereof), sintered cubic boron nitride, sintered diamond, a hard material having cubic boron nitride particles dispersed therein, a heat-resistant alloy or the like.

Among these, cemented carbide is relatively inexpensive and can lengthen the tool life. Therefore, cemented carbide is preferably used as the material of spot friction welding tool 1. When cemented carbide is used as the material of spot friction welding tool 1, the cemented carbide may include free carbon or an abnormal phase called η phase in the structure thereof

(Coating Film)

In the present embodiment, a coating film may be formed on a part of or the whole of the surface of spot friction welding tool 1. As a result, the oxidation resistance or the wear resistance of spot friction welding tool 1 can be enhanced. A conventionally known coating film used as a coating film for a cutting tool or a spot friction welding tool can be used as the coating film. The coating film may be formed of a single layer, or may be formed of two or more stacked layers.

(First Member and Second Member)

Spot friction welding tool 1 of the present embodiment is used in spot friction welding of first member 6 and second member 7, each of which is a steel plate having a tensile strength of not lower than 590 MPa. A steel plate having a higher tensile strength has increasingly been used in, for example, a motor vehicle body in order to achieve both reduction in weight of the vehicle body for realizing improvement of fuel efficiency or reduction in $CO_2$ emissions and collision safety. A high tensile shear load is required for a joint of steel plates having a high tensile strength, in order to make full use of the high tensile strength of the steel plates themselves. However, when the steel plates each having a tensile strength of not lower than 590 MPa are joined by melt joining (such as, for example, resistance spot welding), spatters (droplets) are likely to occur at the joined spot. Therefore, the scattered spatters adhere to the vehicle body, which leads to problems such as a poor outer appearance or a bad working environment. On the other hand, in the present embodiment, the steel plates having a high tensile strength are joined by spot friction welding which is non-melt joining. Therefore, even when each of first member 6 and second member 7 has a tensile strength of not lower than 590 MPa, the occurrence of spatters at the joined spot can be prevented and a joint having a high tensile shear load and a high strength can be obtained.

Spot friction welding tool 1 of the present embodiment is more preferably used in spot friction welding of first member 6 and second member 7, each of which is a steel plate having a tensile strength of not lower than 980 MPa. When each of first member 6 and second member 7 has a tensile strength of not lower than 980 MPa, more spatters occur at the joined spot during melt joining such as resistance spot welding. However, in the present embodiment, even when it is difficult to obtain a high joining strength by melt joining (i.e., even when each of first member 6 and second member 7 has a tensile strength of not lower than 980 MPa), the occurrence of spatters at the joined spot can be prevented and a joint having a high tensile shear load and a high strength can be obtained.

An upper limit of the tensile strength of each of first member 6 and second member 7 is not particularly limited. However, the tensile strength of each of first member 6 and second member 7 is preferably not higher than 1500 MPa, because first member 6 and second member 7 having such tensile strength can be put to practical use as steel plates for a motor vehicle body. The tensile strength of each of first member 6 and second member 7 is more preferably not higher than 1200 MPa.

A thickness of first member 6 that can be used in joining by spot friction welding tool l of the present embodiment is not particularly limited. However, the following applies to a thickness of second member 7 that can be used in joining by spot friction welding tool 1 of the present embodiment. Unless a second member insertion depth is set at a value of a certain degree or more, control of the second member insertion depth is difficult, and thus, the tensile shear load of the joint has a wide range of variations. Therefore, the thickness of second member 7 is preferably not smaller than 0.5 mm. The thicknesses of first member 6 and second member 7 are both more preferably not smaller than 0.8 mm and not greater than 1.5 mm.

(Relationship between Second Member Insertion Volume V and Thickness t of Second Member)

In the present embodiment, when t (mm) represents a thickness of second member 7 and second member insertion volume V ($mm^3$) represents a volume of probe 3 inserted into second member 7 at the time of pressing, the relationship between V and t satisfies the following equation (1):

$$V \geq 2.75t^2 + 8.19t - 4.19 \ (t \geq 0.5 \ \text{mm}) \cdots (1).$$

In the present embodiment, the relationship between second member insertion volume V ($mm^3$) and thickness t (mm) of second member 7 more preferably satisfies the following equation (2):

$$V \geq 3.25t^2 + 9.62t - 4.48 \ (t \geq 0.5 \ \text{mm}) \cdots (2).$$

"Second member insertion volume V" herein refers to a volume occupied by a region surrounded by the side surface of the probe and the tip end surface of the probe, and a region extending from the tip end surface of the probe to a height equal to the below-described second member insertion depth, when the probe is inserted to the depth deeper in the thickness direction of the second member than the contact surface of the first member and the second member at the time of pressing. "Second member insertion volume V" represents a volume corresponding to V in Fig. 2.

Second member insertion volume V can be calculated from probe tip end radius r, probe taper angle $\theta$ and the second member insertion depth. "Second member insertion depth" herein refers to a distance between the contact surface of the first member and the second member and the tip end surface of the probe, assuming that these surfaces are parallel to each other, when the probe is inserted to the depth deeper in the thickness direction of the second member than the contact surface of the first member and the second member at the time of pressing. "Second member insertion depth" corresponds to h in Fig. 2. The second member insertion depth can be obtained by measuring a second member remaining thickness after joining and determining a difference between the thickness of the second member and the second member remaining thickness. "Second member remaining thickness" herein refers to a vertical distance from a surface of the second member that is not in contact with the probe to the tip end surface of the probe when the probe is inserted to the depth deeper in the thickness direction of the second member than the contact surface of the first member and the second member at the time of pressing. "Second member remaining thickness" corresponds to t' in Fig. 2.

In the present embodiment, second member insertion volume V ($mm^3$) and thickness t (mm) of second member 7 satisfy the above-described equation (1) or the above-described equation (2), and thus, a joint having a high strength is obtained. The reason for this will be described below.

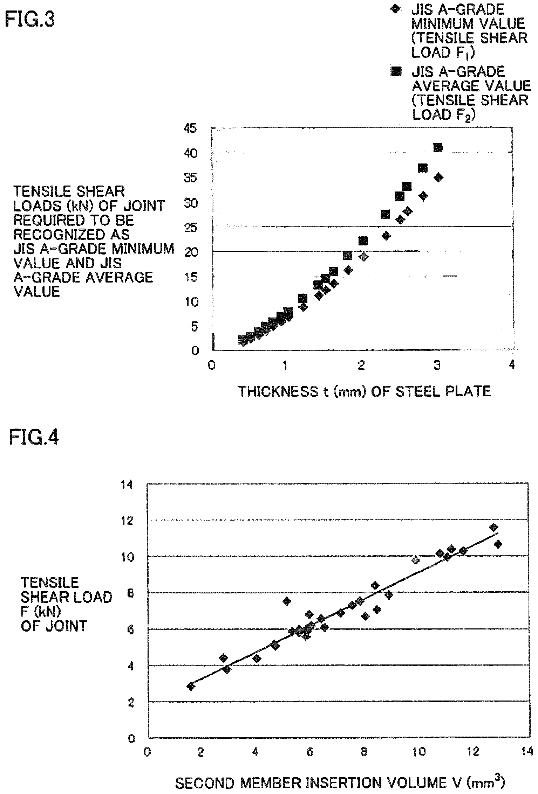

As to the strength of a joint when two steel plates are joined by resistance spot welding, grades are defined in JIS Z 3140: 1989 based on an upper limit value of the tensile shear load that the joint can endure (hereinafter also denoted as "tensile shear load of joint"). Among these, a minimum value and an average value of the tensile shear load of the joint required to be recognized as "welded portion requiring especially strength" are defined as a JIS A-grade minimum value and a JIS A-grade average value, respectively. Fig. 3 is a correlation diagram showing a relationship between thickness t of a thinner steel plate, of steel plates serving as members to be joined, and a tensile shear load $F_1$ (kN) of a joint required to be recognized as the JIS A-grade minimum value based on the definition in JIS Z 3140: 1989 (hereinafter also denoted as "tensile shear load $F_1$") and a tensile shear load $F_2$ (kN) of a joint required to be recognized as the JIS A-grade average value based on the definition in JIS Z 3140: 1989 (hereinafter also denoted as "tensile shear load $F_2$"), when a joint is formed using steel plates each having a tensile strength of not lower than 590 MPa.

In order to derive a mathematical formula about the correlation between tensile shear load $F_1$ (kN) and thickness t of the thinner steel plate, of the steel plates, as well as a mathematical formula about the correlation between tensile shear load $F_2$ (kN) and thickness t of the thinner steel plate, of the steel plates, approximation to quadratic functions is made with a least-square method based on Fig. 3.

Then, the following equation (3) is obtained about the relationship between tensile shear load $F_1$ (kN) and thickness t (mm) of the thinner steel plate, of the steel plates:

$$F_1 = 2.01t^2 + 5.98t - 1.22 \cdots (3).$$

In addition, the following equation (4) is obtained about the relationship between tensile shear load $F_2$ (kN) and thickness t (mm) of the thinner steel plate, of the steel plates:

$$F_2 = 2.37t^2 + 7.02t - 1.43 \cdots (4).$$

It can be seen from the above-described equation (3) that the relationship between F (kN) and thickness t (mm) of the thinner steel plate, of the steel plates joined in the present embodiment, may only satisfy the following equation (5) in order to set tensile shear load F (kN) of the joint obtained using spot friction welding tool 1 of the present embodiment to be higher than or equal to tensile shear load $F_1$ (kN):

$$F \geq 2.01t^2 + 5.98t - 1.22 \cdots (5).$$

In addition, it can be seen from the above-described equation (4) that the relationship between F (kN) and thickness t (mm) of the thinner steel plate, of the steel plates joined in the present embodiment, may only satisfy the following equation (6) in order to set tensile shear load F (kN) of the joint obtained using spot friction welding tool 1 of the present embodiment to be higher than or equal to tensile shear load $F_2$ (kN):

$$F \geq 2.37t^2 + 7.02t - 1.43 \cdots (6).$$

Now, assuming that the thickness of the second member is the same as or smaller than the thickness of the first member in the present embodiment, "thickness t of the thinner steel plate, of the steel plates joined" is replaced with "thickness t of the second member" in the above-described equation (5) and the above-described equation (6).

In order to obtain a spot friction welding tool as joining means that makes it possible to obtain a joint having a tensile shear load higher than or equal to the tensile shear load required to be recognized as the JIS A-grade minimum value or the JIS A-grade average value in spot friction welding of the first member and the second member, each of which is a steel plate having a tensile strength of not lower than 590 MPa, the inventors of the present invention variously changed the shape of the probe and the dimension of the probe to prototype a plurality of types of spot friction welding tools, and conducted a joining test on steel plates having various tensile strengths or various dimensions, using the prototyped spot friction welding tools. As a result, the inventors of the present invention found that second member insertion volume V is an important factor governing the tensile shear load of the joint. Fig. 4 is a correlation diagram showing a relationship between second member insertion volume V and tensile shear load F of the joint obtained by the experiment conducted by the inventors of the present invention. The inventors of the present invention used, as the first member and the second member, a plurality of types of steel plates each having a tensile strength of not lower than 270 MPa and not higher than 980 MPa and a thickness of not smaller than 0.6 mm and not greater than 2.0 mm, and joined the first member and the second member using the spot friction welding tools having different probe shapes and probe dimensions, and researched the relationship between second member insertion volume V and tensile shear load F of the joint. The result is shown in Fig. 4.

It can be seen from Fig. 4 that second member insertion volume V ($mm^3$) and tensile shear load F (kN) have a positive correlation regardless of the factors such as the shape of the probe, the dimension of the probe, the tensile strengths of the members to be joined (the first member and the second member), and the dimensions of the members to be joined. By making approximation of this correlation to a linear function with the least-square method, the following approximate equation (7) is obtained about the relationship between second member insertion volume V ($mm^3$) and tensile shear load F (kN). A line segment in Fig. 4 represents a part of a straight line expressed by the following equation (7).

$$F = 0.73V + 1.84 \cdots (7)$$

By substituting the above-described equation (7) into the above-described equation (5) and performing calculation, the above-described equation (1) (relational equation indicating the relationship between second member insertion volume V ($mm^3$) and thickness t (mm) (t $\geq$ 0.5 mm) of second member 7 when tensile shear load F (kN) of the joint obtained using spot friction welding tool 1 of the present embodiment becomes higher than or equal to tensile shear load $F_1$ (kN)) can be obtained.

Therefore, second member insertion volume V ($m^2$) and thickness t (mm) of the second member satisfy the above-described equation (1) in spot friction welding, and thus, a tensile shear load higher than or equal to the tensile shear load required to be recognized as the JIS A-grade minimum value can be obtained as the tensile shear load of the joint. As a result, a joint having a high joining strength can be fabricated.

In addition, by substituting the above-described equation (7) into the above-described equation (6) and performing calculation, the above-described equation (2) (relational equation indicating the relationship between the second member insertion volume ($mm^3$) and thickness t (mm) (t $\geq$ 0.5 mm) of second member 7 when tensile shear load F (kN) of the joint obtained using spot friction welding tool 1 of the present embodiment becomes higher than or equal to tensile shear load $F_2$ (kN)) can be obtained.

Therefore, second member insertion volume V ($m^2$) and thickness t (mm) of the second member satisfy the above-described equation (2) in spot friction welding, and thus, a tensile shear load higher than or equal to the tensile shear load required to be recognized as the JIS A-grade average value can be obtained as the tensile shear load of the joint. As a result, a joint having a higher joining strength can be fabricated, and thus, this is preferable.

(Ratio h/t between Second Member Insertion Depth h and Thickness t of Second Member)

In spot friction welding tool 1 of the present embodiment, a depth h of insertion of probe 3 into second member 7 is preferably such that a ratio h/t between depth h and thickness t of second member 7 is not lower than 0.25 and not higher than 0.75. Hereinafter, depth h of insertion of the probe into the second member will also be denoted as "second member insertion depth h". When h/t is lower than 0.25, a probe tip end diameter d tends to become larger in order to satisfy the above-described equation (1) or the above-described equation (2). As a result, the load required to insert the probe into the members to be joined may become too high. "Probe tip end diameter d" herein refers to a diameter of the tip end surface of the probe and corresponds to a value obtained by doubling probe tip end radius r described above. When h/t is higher than 0.75, the hooking height may become too high, and as a result, the tensile shear load of the joint may become lower. "Hooking height" herein refers to a distance in the vertical direction from the contact surface of the first member and the second member to an upper end of the hook line that is a non-joined region. "Hooking height" corresponds to H in Fig. 2. When h/t is set to be not lower than 0.25 and not higher than 0.75, the above-described equation (1) or the above-described equation (2) is satisfied without probe tip end diameter d and hooking height H increasing excessively. h/t is more preferably not lower than 0.4 and not higher than 0.75.

<Method for Manufacturing Spot Friction Welding Tool>

A spot friction welding tool fabricated as described below is preferably used as spot friction welding tool 1 of the present embodiment. First, raw material powders are mixed. As the raw material powders, materials (e.g., cemented carbide) conventionally known as materials of various types of joining tools such as a spot friction welding tool or a friction stir welding tool can be used without any particular limitation. Next, ethanol is added to the mixed raw material powders and the mixture is stirred for approximately 4 to 10 hours with an attritor. Ethanol is volatilized, and thereafter, the mixture is uniaxially pressed at a pressure of 100 MPa and sintered at 1200 to 1700°C for approximately 1 to 3 hours. A sintered body thus obtained is ground with a diamond grindstone or the like. The spot friction welding tool is thus obtained.

In the present embodiment, a coating film may be fabricated on a part of or the whole of a surface of the spot friction welding tool. Any conventionally known film formation processes can be used as a film formation process for the coating film. For example, a PVD (physical vapor deposition) method (e.g., a vacuum arc vapor deposition method), a CVD (chemical vapor deposition) method or the like can be used. Alternatively, two or more conventionally known film formation processes may be combined.

<Joining Method>

A joining method of the present embodiment will be described below.

The joining method of the present embodiment is a joining method using spot friction welding tool 1 of the present embodiment. Specifically, the joining method of the present embodiment is a joining method for performing spot friction welding of first member 6 and second member 7 by superposing first member 6 and second member 7 and pressing spot friction welding tool 1 against first member 6 and second member 7 from the first member 6 side. The joining method of the present embodiment includes a pressing step of superposing first member 6 and second member 7 and pressing spot friction welding tool 1 against first member 6 and second member 7 from the first member 6 side. Each of first member 6 and second member 7 is a steel plate having a tensile strength of not lower than 590 MPa. Spot friction welding tool 1 is rotatable around rotation axis 4. Spot friction welding tool 1 includes column 2 having shoulder 5 at a tip end thereof, and cylindrical or truncated conical probe 3 protruding from shoulder 5 in a direction of extension of rotation axis 4. The pressing step is a step of joining first member 6 and second member 7 by inserting probe 3 into first member 6 and second member 7, while rotating spot friction welding tool 1 around rotation axis 4. When t (mm) represents a thickness of second member 7 and second member insertion volume V ($mm^3$) represents a volume of probe 3 inserted into second member 7 in the pressing step, a relationship between V and t satisfies a following equation (1):

$$V \geq 2.75t^2 + 8.19t - 4.19 \ (t \geq 0.5 \ \text{mm}) \cdots (1).$$

As long as the joining method of the present embodiment includes the above-described pressing step, the joining method of the present embodiment may include other steps. Examples of the other steps can include a step of preparing first member 6 and second member 7, and the like.

(Step of Preparing First Member and Second Member)

The joining method of the present embodiment can include the step of preparing first member 6 and second member 7 (hereinafter also denoted as "preparation step"). Although this preparation step is a step of preparing first member 6 and second member 7 used in the pressing step, this preparation step may include a step of forming a joined spot of first member 6 and second member 7. As a method for forming the joined spot, a part of first member 6 and a part of second member 7 may be superposed to form a superposed portion and this superposed portion may serve as the joined spot. The whole of first member 6 and the whole of second member 7 may be superposed to form a superposed portion, or the whole of first member 6 and a part of second member 7 may be superposed to form a superposed portion, or a part of first member 6 and the whole of second member 7 may be superposed to form a superposed portion. When the superposed portion serves as the joined spot, a width of the superposed portion needs to be larger than or equal to a diameter of shoulder 5.

Each of first member 6 and second member 7 is a steel plate having a tensile strength of not lower than 590 MPa.

The joining method of the present embodiment is a joining method by spot friction welding which is non-melt joining. Therefore, even when first member 6 and second member 7 each having a tensile strength of not lower than 590 MPa are members to be joined as described above, the occurrence of spatters at the joined spot can be prevented and a joint having a high strength can be obtained.

Each of first member 6 and second member 7 may be a steel plate having a tensile strength of not lower than 980 MPa. Even in the case of using steel plates in which spatters are likely to occur in resistance spatter welding and thus it is difficult to obtain a high joining strength (e.g., steel plates each having a tensile strength of not lower than 980 MPa), the occurrence of spatters at the joined spot can be prevented and a joint having a high strength can be obtained by using the joining method of the present embodiment.

(Pressing Step)

The joining method of the present embodiment includes a step of superposing first member 6 and second member 7 and pressing spot friction welding tool 1 against first member 6 and second member 7 from the first member 6 side (pressing step).

The pressing step is a step of joining first member 6 and second member 7 by inserting probe 3 to a depth deeper in the thickness direction of second member 7 than contact surface 8 of first member 6 and second member 7, while rotating spot friction welding tool 1 around rotation axis 4. As a result of this step, first member 6 and second member 7 are joined and a joint is formed.

In the pressing step, probe 3 is inserted into the members to be joined while rotating probe 3, and thus, the frictional heat is generated. The frictional heat causes softening and plastic flow of first member 6 and second member 7 at the joined spot. As a result, first member 6 and second member 7 are joined and a joint is formed.

In the present embodiment, when t (mm) represents a thickness of second member 7 and second member insertion volume V (mm$^3$) represents a volume of probe 3 inserted into second member 7 in the pressing step, the relationship between V and t satisfies the following equation (1):

$$V \geq 2.75t^2 + 8.19t - 4.19 \ (t \geq 0.5 \text{ mm}) \cdots (1).$$

Probe 3 is inserted into the joined spot of first member 6 and second member 7 such that the relationship between V and t satisfies the above-described equation (1), and joining by pressing is performed to form a joint. As a result, the tensile shear load of the joint can be increased and the joining strength can be increased.

In the present embodiment, the relationship between second member insertion volume V (mm$^3$) and thickness t (mm) of the second member preferably satisfies the following equation (2):

$$V \geq 3.25t^2 + 9.62t - 4.48 \ (t \geq 0.5 \text{ mm}) \cdots (2).$$

As a result, the tensile shear load of the joint can be further increased and the joining strength can be further increased. Since the description and the reason for introduction of the above-described equation (1) and the above-described equation (2) are as described above, description will not be repeated.

In the present embodiment, when h (mm) represents a depth of insertion of probe 3 into second member 7, ratio h/t between the h and thickness t (mm) of second member 7 is preferably not lower than 0.25 and not higher than 0.75. As a result, the above-described equation (1) or the above-described equation (2) is satisfied without probe tip end diameter d and hooking height H increasing excessively. Since the details of ratio h/t are also as described above, description will not be repeated.

In spot friction welding tool 1 used in the present embodiment, probe 3 preferably includes a side surface continuous to shoulder 5, and this side surface preferably has angle θ of not less than 0° and not more than 15° with respect to rotation axis 4. As a result, the shape of spot friction welding tool 1 can become a shape that makes it possible to reduce the load required to insert probe 3 into the members to be joined, and that makes it possible to apply a sufficient surface pressure to first member 6 through shoulder 5. Since the details of angle θ are also as described above, description will not be repeated.

In spot friction welding tool 1 used in the present embodiment, probe 3 preferably includes a side surface continuous to shoulder 5, and shoulder 5 preferably has a mortar-like dented shape from an outer edge thereof to a portion intersecting with the side surface. As a result, it is possible to prevent first member 6 and second member 7 pushed out by probe 3 from overflowing from shoulder 5 during joining by pressing. Therefore, a better outer appearance of the formed joined portion is obtained. In addition, since the outer edge of shoulder 5 holds down the member to be joined (e.g., first member 6), vibration of spot friction welding tool 1 during joining can be prevented.

The rotation speed of spot friction welding tool 1 in the pressing step (hereinafter also denoted as "tool rotation speed"), the load applied to the joined spot by spot friction welding tool 1 (hereinafter also denoted as "joining load"), and the time of being pressed by spot friction welding tool 1 (hereinafter also denoted as "joining time") are not particularly limited and may be determined as appropriate depending on the shape of probe 3, the dimension of probe 3, dimensions of first member 6 and second member 7 which are members to be joined, and the like. When any one or all of the tool rotation speed, the joining load and the joining time is/are too small, probe 3 is not sufficiently pushed into the members to be joined and thus it may be difficult to obtain a high joining strength. On the other hand, when any one or all of the tool rotation speed, the joining load and the joining time is/are too great, the temperature of the joined portion becomes too high and thus the strength of the joint may decrease. In addition, the spot friction welding tool may be broken.

Examples

The present invention will be described in more detail below with reference to Examples. However, the present invention is not limited to these Examples.

<Example 1>

In each of No. 1-1 to No. 1-6, a spot friction welding tool was fabricated, and a first member and a second member were joined using the fabricated spot friction welding tool, to thereby evaluate the spot friction welding tool.

(Column)

The spot friction welding tool fabricated in each of No. 1-1 to No. 1-6 included a column having a shoulder at a tip end thereof, and a cylindrical or truncated conical probe protruding from the shoulder in a direction of extension of a rotation axis. The probe included a side surface continuous to the shoulder. The shoulder had a mortar-like dented shape from an outer edge thereof to a portion intersecting with the side surface, and a diameter of the shoulder (i.e., diameter of the column) was 10 mm.

(Probe)

The probe shape, probe tip end radius r, probe taper angle $\theta$, and probe length l of the spot friction welding tool fabricated in each of No. 1-1 to No. 1-6 are shown in Table 1. "Probe shape" in Table 1 represents whether the probe has a cylindrical shape or a truncated conical shape. In No. 1-1 to No. 1-6, the probe shape was set to have the shape shown in Table 1 and probe tip end radius r, probe taper angle $\theta$ and probe length l were set to have the values shown in Table 1, and thus, the above-described equation (1) was satisfied ("satisfied" is shown in the section of "Satisfaction of equation (1)" in Table 1). In No. 1-2 to No. 1-4, the above-described equation (2) was satisfied ("satisfied" is shown in the section of "Satisfaction of equation (2)" in Table 1). However, in No. 1-1, No. 1-5 and No. 1-6, the above-described equation (2) was not satisfied ("not satisfied" is shown in the section of "Satisfaction of equation (2)" in Table 1).

(Material of Spot Friction Welding Tool)

In No. 1-1 to No. 1-6, cemented carbide was used as a material of the spot friction welding tool. Cemented carbide was fabricated by sintering WC crystal grains having an average size of 2 $\mu$m. A composition of cemented carbide was such that Co was 3 wt % and WC was 97 wt %.

(Method for Manufacturing Spot Friction Welding Tool)

In No. 1-1 to No. 1-6, the spot friction welding tool was fabricated as follows. Specifically, the above-described WC crystal grains were mixed, and ethanol was further added, and the mixture was stirred for 8 hours with an attritor. Ethanol was volatilized, and thereafter, the mixture was uniaxially pressed at a pressure of 100 MPa and sintered at 1500°C for 2 hours, The sintered body thus obtained was ground with a diamond grindstone or the like. The spot friction welding tool was thus fabricated.

(Coating Film)

In No. 1-1 to No. 1-6, an $Al_{0.57}Ti_{0.38}Si_{0.05}N$ film (coating film) having a film thickness of 4 $\mu$m was formed on the whole of a surface of the spot friction welding tool by the vacuum arc vapor deposition method in order to prevent oxidation and improve the wear resistance of the spot friction welding tool.

(Preparation Step)

In No. 1-1 to No. 1-6, one ultrahigh tensile steel plate having a thickness of 1.2 mm and a tensile strength of 980 MPa was prepared for the first member (member to be joined), and one ultrahigh tensile steel plate having a thickness of 1.2 mm and a tensile strength of 980 MPa was prepared for the second member (member to be joined) (Table 1). In order to evaluate the tensile shear load of a joint by a shear test in accordance with a method of JIS Z 3136: 1999, a dimension of each of the first member and the second member was set to be 30 mm in width and 100 mm in length. The prepared first member and second member were superposed to form a superposed portion of 30 mm, and the superposed portion served as a joined spot.

(Pressing Step)

The probe was inserted to a depth deeper in the thickness direction of the second member than a contact surface of the first member and the second member, while rotating the spot friction welding tool around the rotation axis. As a result, the first member and the second member were joined. The tool rotation speed was set at 1500 rpm, the joining load was set at 1500 kgf, and the joining time was adjusted to be between 1.5 s to 3.0 s depending on the shape of the spot friction welding tool, to thereby form a joint.

(Relationship between Second Member Insertion Volume V and Thickness t of Second Member)

A second member remaining thickness t', second member insertion depth h, h/t, and second member insertion volume V when the first member and the second member are joined using the spot friction welding tool in each of No. 1-1 to No. 1-6 are shown in Table 1.

Specifically, second member remaining thickness t' was first measured with a micrometer (model No. "CPM30-25MJ" manufactured by Mitutoyo Corporation). Second member insertion volume V was calculated based on this measurement result (second member remaining thickness t'), thickness t of the second member, probe tip end radius r, and probe taper angle $\theta$.

<Comparative Example 1>

Using the same method as that of No. 1-1 to No. 1-6, a spot friction welding tool shown in each of No. 1-11 to No. 1-14 in Table 1 was fabricated, except that the probe shape, probe tip end radius r, probe taper angle $\theta$, and probe length l were changed, and thus, the relationship between the value of second member insertion volume V and thickness t of the second member no longer satisfied the above-described equation (1) and the above-described equation (2) ("not satisfied" is shown in the section of "Satisfaction of equation (1)" and the section of "Satisfaction of equation (2)" in Table 1).

Similarly to Example 1, the first member and the second member were joined using the fabricated spot friction welding tool. The tensile strength of the first member and the second member, thickness t of the second member, the probe shape, probe tip end radius r, probe taper angle $\theta$, probe length l, second member remaining thickness t', second member insertion depth h, h/t, and second member insertion volume V in No. 1-11 to No. 1-14 are shown in Table 1.

<Example 2>

Using the same method as that of No. 1-1 to No. 1-6, a spot friction welding tool shown in each of No. 2-1 to No. 2-6 in Table 1 was fabricated, except that the probe shape, probe tip end radius r, probe taper angle $\theta$, and probe length l were changed, the thickness, the width, the length, and the superposed portion of the first member and the second member joined using the fabricated spot friction welding tool were changed to 1.5 mm, 40 mm, 125 mm, and 40 mm, respectively, and the joining time was adjusted to be between 2.0 to 3.4 s. Similarly to Example 1, the first member and the second member were joined using the fabricated spot friction welding tool.

The tensile strength of the first member and the second member, thickness t of the second member, the probe shape, probe tip end radius r, probe taper angle $\theta$, probe length l, second member remaining thickness t', second member insertion depth h, h/t, and second member insertion volume V in No. 2-1 to No. 2-6 are shown in Table 1. In No. 2-1 to No. 2-6, the probe shape was set to have the shape shown in Table 1 and probe tip end radius r, probe taper angle $\theta$ and probe length l were set to have the values shown in Table 1, and thus, the above-described equation (1) was satisfied ("satisfied" is shown in the section of "Satisfaction of equation (1)" in Table 1). In No. 2-3 and No. 2-4, the above-described equation (2) was satisfied ("satisfied" is shown in the section of "Satisfaction of equation (2)" in Table 1). However, in No. 2-1, No. 2-2, No. 2-5, and No. 2-6, the above-described equation (2) was not satisfied ("not satisfied" is shown in the section of "Satisfaction of equation (2)" in Table 1).

<Comparative Example 2>

Using the same method as that of No. 2-1 to No. 2-6, a spot friction welding tool shown in each of No. 2-11 to No. 2-13 in Table 1 was fabricated, except that the probe shape, probe tip end radius r, probe taper angle θ, and probe length 1 were changed, and thus, the relationship between the value of second member insertion volume V and thickness t of the second member no longer satisfied the above-described equation (1) and the above-described equation (2) ("not satisfied" is shown in the section of "Satisfaction of equation (1)" and the section of "Satisfaction of equation (2)" in Table 1).
Similarly to Example 2, the first member and the second member were joined using the fabricated spot friction welding tool. The tensile strength of the first member and the second member, thickness t of the second member, the probe shape, probe tip end radius r, probe taper angle θ, probe length l, second member remaining thickness t', second member insertion depth h, h/t, and second member insertion volume V in No. 2-11 to No. 2-13 are shown in Table 1.

<Example 3>

Using the same method as that of No. 1-1 to No. 1-6, a spot friction welding tool shown in each of No. 3-1 to No. 3-6 in Table 1 was fabricated, except that the probe shape, probe tip end radius r, probe taper angle θ, and probe length l were changed, the thickness of the first member and the second member joined using the fabricated spot friction welding tool was changed to 1.0 mm, each of the first member and the second member was changed to a high tensile steel plate having a tensile strength of 590 MPa, the tool rotation speed was changed to 1000 rpm, and the joining load was changed to 1200 kgf. Similarly to Example 1, the first member and the second member were joined using the fabricated spot friction welding tool.
The tensile strength of the first member and the second member, thickness t of the second member, the probe shape, probe tip end radius r, probe taper angle θ, probe length l, second member remaining thickness t', second member insertion depth h, h/t, and second member insertion volume V in No. 3-1 to No. 3-6 are shown in Table 1. In No. 3-1 to No. 3-6, the probe shape was set to have the shape shown in Table 1 and probe tip end radius r, probe taper angle θ and probe length l were set to have the values shown in Table 1, and thus, the above-described equation (1) was satisfied ("satisfied" is shown in the section of "Satisfaction of equation (1)" in Table 1). In No. 3-1 to No. 3-4, the above-described equation (2) was satisfied ("satisfied" is shown in the section of "Satisfaction of equation (2)" in Table 1). However, in No. 3-5 and No. 3-6, the above-described equation (2) was not satisfied ("not satisfied" is shown in the section of "Satisfaction of equation (2)" in Table 1).

<Comparative Example 3>

Using the same method as that of No. 3-1 to No. 3-6, a spot friction welding tool shown in each of No. 3-11 to No. 3-13 in Table 1 was fabricated, except that the probe shape, probe tip end radius r, probe taper angle θ, and probe length l were changed, and thus, the relationship between the value of second member insertion volume V and thickness t of the second member no longer satisfied the above-described equation (1) and the above-described equation (2) ("not satisfied" is shown in the section of "Satisfaction of equation (1)" and the section of "Satisfaction of equation (2)" in Table 1).
Similarly to Example 3, the first member and the second member were joined using the fabricated spot friction welding tool. The tensile strength of the first member and the second member, thickness t of the second member, the probe shape, probe tip end radius r, probe taper angle θ, probe length l, second member remaining thickness t', second member insertion depth h, h/t, and second member insertion volume V in No. 3-11 to No. 3-13 are shown in Table 1.

[Table 1 (1/2)]

| | Tensile strength (MPa) of first member and second member | Thickness t(mm) of second member | Probe shape | Probe tip end radius r(mm) | Probe taper angle θ (°) | Probe length l(mm) | Second member remaining thickness t'(mm) | Second member insertion depth h(mm) | h/t | Second member insertion volume V(mm³) | Satisfaction of equation (1) | Satisfaction of equation (2) | Tensile shear load (kN) | Grade for tensile shear load based on JIS Z 3140: 1989 |
|---|---|---|---|---|---|---|---|---|---|---|---|---|---|---|
| No. 1-1 | 980 | 1.2 | cylindrical | 2 | 0 | 22 | 0.42 | 0.78 | 0.65 | 9.8 | satisfied | not satisfied | 9.1 | greater than or equal to JIS A-grade minimum value |
| No. 1-2 | 980 | 1.2 | cylindrical | 2.4 | 0 | 2 | 0.5 | 0.7 | 0.58 | 12.67 | satisfied | satisfied | 11 | greater than or equal to JIS A-grade average value |
| No. 1-3 | 980 | 1.2 | cylindrical | 2.4 | 0 | 22 | 0.44 | 0.76 | 063 | 13.75 | satisfied | satisfied | 12.2 | greater than or equal to JIS A-grade average value |
| No. 1-4 | 980 | 1.2 | truncated conical | 2.3 | 5 | 2.2 | 0.42 | 0.78 | 0.65 | 13.35 | satisfied | satisfied | 11.5 | greater than or equal to JIS A-grade average value |
| No. 1-5 | 980 | 1.2 | truncated conical | 2 | 10 | 2.2 | 0.43 | 0.77 | 0.64 | 10.35 | satisfied | not satisfied | 9.2 | greater than or equal to JIS A-grade minimum value |

| | Tensile strength (MPa) of first member and second member | Thickness t(mm) of second member | Probe shape | Probe tip end radius r(mm) | Probe taper angle θ (°) | Probe length l(mm) | Second member remaining thickness t'(mm) | Second member insertion depth h(mm) | h/t | Second member insertion volume V(mm³) | Satisfaction of equation (1) | Satisfaction of equation (2) | Tensile shear load (kN) | Grade for tensile shear load based on JIS Z 3140: 1989 |
|---|---|---|---|---|---|---|---|---|---|---|---|---|---|---|
| No. 1-6 | 980 | 1.2 | truncated conical | 1.9 | 15 | 2.2 | 0.41 | 0.79 | 066 | 9.99 | satisfied | not satisfied | 9 | greater than or equal to JIS A-grade minimum value |
| No. 1-11 | 980 | 1.2 | cylindrical | 2.4 | 0 | 1.6 | 0.83 | 0.37 | 0.31 | 6.7 | not satisfied· | not satisfied | 6.8 | less than JIS A grade minimum value |
| No. 1-12 | 980 | 1.2 | cylindrical | 1.9 | 0 | 2.2 | 0.4 | 0.8 | 0.67 | 9.07 | not satisfied | not satisfied | 8.5 | less than JIS A-grade minimum value |
| No. 1-13 | 980 | 12 | truncated conical | 1.5 | 10 | 2.2 | 0.36 | 0.84 | 0.7 . | 6.54 | not satisfied | not satisfied | 6.4 | less than JIS A-grade minimum value |
| No. 1-14 | 980 | 1.2 | truncated conical | 1.9 | 5 | 2.2 | 0.42 | 0.78 | 0.65 | 9.17 | not satisfied | not satisfied | 8.3 | less than JIS A-grade minimum value |

EP 3 167 993 A1

[Table 1(2/2)]

| | Tensile strength (MPa) of first member and second member | Thickness t(mm) of second member | Probe shape | Probe tip end radius r(mm) | Probe taper angle θ(°) | Probe length l(mm) | Second member remaining thickness t'(mm) | Second member insertion depth h(mm) | h/t | Second member insertion volume V(mm³) | Satisfaction of equation (1) | Satisfaction of equation (2) | Tensile shear load (kN) | Grade for tensile shear load based on JIS Z 3140:1989 |
|---|---|---|---|---|---|---|---|---|---|---|---|---|---|---|
| No. 2-1 | 980 | 1.5 | cylindrical | 2.1 | 0 | 2.8 | 0.45 | 1.05 | 0.7 | 14.55 | satisfied | not satisfied | 1 12.6 | greater than or equal to JIS A-grade minimum value |
| No. 2-2 | 980 | 1-5 | cylindrical | 24 | 0 | 2.6 . | 0.61 | 0.89 | 0.59 | 16.11 | satisfied | not satisfied | 13.5 | greater than or equal to JIS A-grade minimum value |
| No. 2-3 | 980 | 1.5 | cylindrical | 2.4 | 0 | 2.8 | 0.46 | 1.04 | 0.69 | 18.82 | satisfied | satisfied | 15.8 | greater than or equal to JIS A-grade average value |
| No. 2.4 | 980 | 15 | truncated conical | 2.3 | 5 | 2.8 | 0.44 | 1.06 | 0.71 | 18.34 | satisfied | satisfied | 15.4 | greater than or equal to JIS A-grade average value |
| No. 2-5 | 980 | 1.5 | truncated conical | 2 | 10 | 2.8 | 0.43 | 1.07 | 0.71 | 14.75 | satisfied | not satisfied | 12.7 | greater than or equal to JIS A-grade minimum value |

| | Tensile strength (MPa) of first member and second member | Thickness t(mm) of second member | Probe shape | Probe tip end radius r(mm) | Probe taper angle θ(°) | Probe length l(mm) | Second member remaining thickness t'(mm) | Second member insertion depth h(mm) | h/t | Second member insertion volume V(mm³) | Satisfaction of equation (1) | Satisfaction of equation (2) | Tensile shear load (kN) | Grade for tensile shear load based on JIS Z 3140:1989 |
|---|---|---|---|---|---|---|---|---|---|---|---|---|---|---|
| No. 2-6 | 980 | 1.5 | truncated conical | 1.9 | 15 | 2.8 | 0.41 | 1.09 | 0.73 | 14.36 | satisfied | not satisfied | 12.5 | greater than or equal to JIS A-grade minimum value |
| No. 2-11 | 980 | 1.5 | cylindrical | 19 | 0 | 28 | 0.42 | 1.08 | 0.72 | 12.25 | not satisfied | not satisfied | 10.6 | less than JIS A-grade minimum value |
| No. 2-12 | 980 | 1.5 | truncated conical | 1.5 | 10 | 2.8 | 0.44 | 1.06 | 0.71 | 8.47 | not satisfied | not satisfied | 8.1 | less than JIS A-grade minimum value |
| No. 2-13 | 980 | 1.5 | truncated conical | 1.9 | 5 | 2.8 | 0.45 | 1.05 | 0.7 | 12.49 | not satisfied | not satisfied | 11.1 | less than JIS A-grade minimum value |
| No. 3-1 | 590 | 1.0 | cylindrical | 21 | 0 | 1.8 | 0.35 | 0.65 | 0.65 | 9.01 | satisfied | satisfied | 8.2 | greater than or equal to JIS A-grade average value |
| No. 3-2 | 590 | 1.0 | cylindrical | 2.4 | 0 | 1.6 | 0.5 | 0.5 | 0.5 | 9.05 | satisfied | satisfied | 8.6 | greater than or equal to JIS A-grade average value |

19

| | Tensile strength (MPa) of first member and second member | Thickness t(mm) of second member | Probe shape | Probe tip end radius r(mm) | Probe taper angle θ(°) | Probe length l(mm) | Second member remaining thickness t'(mm) | Second member insertion depth h(mm) | h/t | Second member insertion volume V(mm³) | Satisfaction of equation (1) | Satisfaction of equation (2) | Tensile shear load (kN) | Grade for tensile shear load based on JIS Z 3140:1989 |
|---|---|---|---|---|---|---|---|---|---|---|---|---|---|---|
| No. 3-3 | 590 | 1.0 | cylindrical | 2.4 | 0 | 1.8 | 0.42 | 0.58 | 0.58 | 10.5 | satisfied | satisfied | 9.4 | greater than or equal to JIS A-grade average value |
| No. 3-4 | 590 | 1.0 | truncated conical | 2.3 | 5 | 1.8 | 0.41 | 0.59 | 0.59 | 10.03 | satisfied | satisfied | 9.3 | greater than or equal to JIS A-grade average value |
| No. 3-5 | 590 | 1.0 | truncated conical | 2 | 10 | 1.8 | 0.39 | 0.61 | 0.61 | 8.09 | satisfied | not satisfied | 7.6 | greater than or equal to JIS A-grade minimum value |
| No. 3-6 | 590 | 1.0 | truncated conical | 1.9 | 15 | 1.8 | 0.38 | 0.62 | 0.62 | 7.66 | satisfied | not satisfied | 7.5 | greater than or equal to JIS A-grade minimum value |
| No. 3-11 | 590 | 1.0 | cylindrical | 2.1 | 0 | 1.4 | 0.66 | 0.34 | 0.34 | 4.71 | not satisfied | not satisfied | 5.4 | less than JIS A-grade minimum value |
| No. 3-12 | 590 | 1.0 | cylindrical | 1.7 | 0 | 1.8 | 0.33 | 0.67 | 0.67 | 6.08 | not satisfied | not satisfied | 6.2 | less than JIS A- grade minimum value |

EP 3 167 993 A1

20

| | Tensile strength (MPa) of first member and second member | Thickness t(mm) of second member | Probe shape | Probe tip end radius r(mm) | Probe taper angle θ(°) | Probe length l(mm) | Second member remaining thickness t'(mm) | Second member insertion depth h(mm) | h/t | Second member insertion volume V(mm³) | Satisfaction of equation (1) | Satisfaction of equation (2) | Tensile shear load (kN) | Grade for tensile shear load based on JIS Z 3140:1989 |
|---|---|---|---|---|---|---|---|---|---|---|---|---|---|---|
| No. 3-13 | 590 | 1.0 | truncated conical | 1.5 | 10 | 1.8 | 032 | 0.68 | 0.68 | 5.2 | not satisfied | not satisfied | 5.8 | less than JIS A-grade minimum value |

<Evaluation Method>

In No. 1-1 to No. 1-6, No. 2-1 to No. 2-6 and No. 3-1 to No. 3-6 as well as No. 1-11 to No. 1-14, No. 2-11 to No. 2-13 and No. 3-11 to No. 3-13, the shear test was conducted on the joint formed using the spot friction welding tool in accordance with the method of JIS Z 3136: 1999, to thereby evaluate the tensile shear load (kN). The result is shown in Table 1.

<Evaluation Result>

According to Table 1, in all of No. 1-11 to No. 1-14, No. 2-11 to No. 2-13 and No. 3-11 to No. 3-13 in which the relationship between the value of second member insertion volume V and thickness t of the second member did not satisfy the above-described equation (1), the tensile shear load of the joint was lower than the tensile shear load required for the JIS A-grade minimum value ("less than JIS A-grade minimum value" is shown in the section of "Grade for tensile shear load based on JIS Z 3140: 1989" in Table 1). On the other hand, in all ofNo. 1-1 to No. 1-6, No. 2-1 to No. 2-6 and No. 3-1 to No. 3-6 in which the above-described equation (1) was satisfied, the tensile shear load of the joint was greater than or equal to the value required for the JIS A-grade minimum value ("greater than or equal to JIS A-grade minimum value" or "greater than or equal to JIS A-grade average value" is shown in the section of "Grade for tensile shear load based on JIS Z 3140: 1989" in Table 1). Therefore, it became clear that the spot friction welding tool of the present example made it possible to increase the tensile shear load of the joint and form the joint having a high joining strength.

In addition, in all of No. 1-2 to No. 1-4, No. 2-3 and No. 2-4, and No. 3-1 to No. 3-4 in which the relationship between the value of second member insertion volume V and thickness t of the second member satisfied the above-described equation (2), the tensile shear load of the joint was greater than or equal to the value required for the JIS A-grade average value ("greater than or equal to JIS A-grade average value" is shown in the section of "Grade for tensile shear load based on JIS Z 3140: 1989" in Table 1). Therefore, it became clear that the spot friction welding tool satisfying the above-described equation (2) made it possible to further increase the tensile shear load of the joint and form the joint having a higher joining strength.

While the embodiment and examples of the present invention have been described above, the configurations of the embodiment and examples described above are intended to be combined as appropriate from the beginning.

It should be understood that the embodiment and examples disclosed herein are illustrative and non-restrictive in every respect. The scope of the present invention is defined by the terms of the claims, rather than the description above, and is intended to include any modifications within the meaning and scope equivalent to the terms of the claims.

REFERENCE SIGNS LIST

1 spot friction welding tool; 2 column; 3 probe; 4 rotation axis; 5 shoulder; 6 first member; 7 second member; 8 contact surface of first member and second member.

**Claims**

1. A spot friction welding tool for performing spot friction welding of a first member and a second member by superposing the first member and the second member and pressing the spot friction welding tool against the first member and the second member from the first member side,

   each of the first member and the second member being a steel plate having a tensile strength of not lower than 590 MPa,

   the spot friction welding tool being rotatable around a rotation axis,

   the spot friction welding tool including a column having a shoulder at a tip end thereof, and a cylindrical or truncated conical probe protruding from the shoulder in a direction of extension of the rotation axis, and

   when t (mm) represents a thickness of the second member and a second member insertion volume V ($mm^3$) represents a volume of the probe inserted into the second member at the time of pressing the spot friction welding tool against the first member and the second member, a relationship between V and t satisfying a following equation (1):

$$V \geq 2.75t^2 + 8.19t - 4.19 \ (t \geq 0.5 \ \mathrm{mm}) \cdots (1).$$

**2.** The spot friction welding tool according to claim 1, wherein
the relationship between the second member insertion volume V (mm$^3$) and the thickness t (mm) of the second member satisfies a following equation (2):

$$V \geq 3.25t^2 + 9.62t - 4.48 \; (t \geq 0.5 \text{ mm}) \cdots (2).$$

**3.** The spot friction welding tool according to claim 1 or 2, wherein
each of the first member and the second member is a steel plate having a tensile strength of not lower than 980 MPa.

**4.** The spot friction welding tool according to any one of claims 1 to 3, wherein
the probe includes a side surface continuous to the shoulder, and
the side surface has an angle $\theta$ of not less than 0° and not more than 15° with respect to the rotation axis.

**5.** The spot friction welding tool according to any one of claims 1 to 4, wherein
when h (mm) represents a depth of insertion of the probe into the second member, a ratio h/t between the h and the thickness t (mm) of the second member is not lower than 0.25 and not higher than 0.75.

**6.** The spot friction welding tool according to any one of claims 1 to 5, wherein
the probe includes a side surface continuous to the shoulder, and
the shoulder has a mortar-like dented shape from an outer edge thereof to a portion intersecting with the side surface.

**7.** A joining method for performing spot friction welding of a first member and a second member by superposing the first member and the second member and pressing a spot friction welding tool against the first member and the second member from the first member side, the joining method comprising:

a pressing step of superposing the first member and the second member and pressing the spot friction welding tool against the first member and the second member from the first member side,
each of the first member and the second member being a steel plate having a tensile strength of not lower than 590 MPa,
the spot friction welding tool being rotatable around a rotation axis,
the spot friction welding tool including a column having a shoulder at a tip end thereof, and a cylindrical or truncated conical probe protruding from the shoulder in a direction of extension of the rotation axis,
the pressing step being a step of joining the first member and the second member by inserting the probe to a depth deeper in a thickness direction of the second member than a contact surface of the first member and the second member, while rotating the spot friction welding tool around the rotation axis, and
when t (mm) represents a thickness of the second member and a second member insertion volume V (mm$^3$) represents a volume of the probe inserted into the second member in the pressing step, a relationship between V and t satisfying a following equation (1):

$$V \geq 2.75t^2 + 8.19t - 4.19 \; (t \geq 0.5 \text{ mm}) \cdots (1).$$

**8.** The joining method according to claim 7, wherein
the relationship between the second member insertion volume V (mm$^3$) and the thickness t (mm) of the second member satisfies a following equation (2):

$$V \geq 3.25t^2 + 9.62t - 4.48 \; (t \geq 0.5 \text{ mm}) \cdots (2).$$

**9.** The joining method according to claim 7 or 8, wherein
each of the first member and the second member is a steel plate having a tensile strength of not lower than 980 MPa.

**10.** The joining method according to any one of claims 7 to 9, wherein
the probe includes a side surface continuous to the shoulder, and
the side surface has an angle $\theta$ of not less than 0° and not more than 15° with respect to the rotation axis.

11. The joining method according to any one of claims 7 to 10, wherein
when h (mm) represents a depth of insertion of the probe into the second member, a ratio h/t between the h and the thickness t (mm) of the second member is not lower than 0.25 and not higher than 0.75.

12. The joining method according to any one of claims 7 to 11, wherein
the probe includes a side surface continuous to the shoulder, and
the shoulder has a mortar-like dented shape from an outer edge thereof to a portion intersecting with the side surface.

FIG.1

FIG.2

FIG.3

JIS A-GRADE MINIMUM VALUE (TENSILE SHEAR LOAD $F_1$)

JIS A-GRADE AVERAGE VALUE (TENSILE SHEAR LOAD $F_2$)

TENSILE SHEAR LOADS (kN) OF JOINT REQUIRED TO BE RECOGNIZED AS JIS A-GRADE MINIMUM VALUE AND JIS A-GRADE AVERAGE VALUE

THICKNESS t (mm) OF STEEL PLATE

FIG.4

TENSILE SHEAR LOAD F (kN) OF JOINT

SECOND MEMBER INSERTION VOLUME V (mm$^3$)

## INTERNATIONAL SEARCH REPORT

| International application No. |
| --- |
| PCT/JP2015/066554 |

**A. CLASSIFICATION OF SUBJECT MATTER**
*B23K20/12*(2006.01)i

According to International Patent Classification (IPC) or to both national classification and IPC

**B. FIELDS SEARCHED**

Minimum documentation searched (classification system followed by classification symbols)
B23K20/12

Documentation searched other than minimum documentation to the extent that such documents are included in the fields searched
Jitsuyo Shinan Koho        1922–1996   Jitsuyo Shinan Toroku Koho   1996–2015
Kokai Jitsuyo Shinan Koho   1971–2015   Toroku Jitsuyo Shinan Koho   1994–2015

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | JP 2013-086175 A   (JFE Steel Corp.), 13 May 2013 (13.05.2013), paragraphs [0034] to [0040]; fig. 2 to 3 (Family: none) | 1-12 |
| Y | JP 2009-241084 A   (Nippon Steel Corp.), 22 October 2009 (22.10.2009), paragraphs [0018] to [0019]; fig. 1 to 3 (Family: none) | 1-12 |
| Y | JP 2004-136365 A   (Kawasaki Heavy Industries, Ltd.), 13 May 2004 (13.05.2004), paragraphs [0075], [0132], [0147]; fig. 10 (Family: none) | 1-12 |

☒ Further documents are listed in the continuation of Box C.      ☐ See patent family annex.

| | |
| --- | --- |
| *    Special categories of cited documents:<br>"A"  document defining the general state of the art which is not considered  to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
| --- | --- |
| 04 September 2015 (04.09.15) | 15 September 2015 (15.09.15) |

| Name and mailing address of the ISA/ | Authorized officer |
| --- | --- |
| Japan Patent Office<br>3-4-3,Kasumigaseki,Chiyoda-ku,<br>Tokyo 100-8915,Japan | |
| | Telephone No. |

Form PCT/ISA/210 (second sheet) (July 2009)

**27**

**INTERNATIONAL SEARCH REPORT**

International application No.

PCT/JP2015/066554

C (Continuation). DOCUMENTS CONSIDERED TO BE RELEVANT

| Category* | Citation of document, with indication, where appropriate, of the relevant passages | Relevant to claim No. |
|---|---|---|
| Y<br>A | JP 2003-001441 A (Aisin Keikinzoku Co., Ltd.),<br>08 January 2003 (08.01.2003),<br>paragraphs [0014], [0020]; fig. 4<br>(Family: none) | 6,12<br>1-5,7-11 |
| Y<br>A | JP 2013-031863 A (Sumitomo Electric Industries, Ltd.),<br>14 February 2013 (14.02.2013),<br>paragraphs [0019] to [0020], [0033] to [0034],<br>[0039], [0047]; fig. 1 to 2<br>(Family: none) | 6,12<br>1-5,7-11 |
| A | US 8052029 B1 (GM GLOBAL TECHNOLOGY OPERATIONS LLC),<br>08 November 2011 (08.11.2011),<br>entire text; all drawings<br>(Family: none) | 1-12 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001314982 A
- JP 2009131891 A
- JP 2013086175 A

**Non-patent literature cited in the description**

- *JIS Z 3140,* 1989
- *JIS Z 3136,* 1999
- Grade for tensile shear load based. *JIS Z 3140,* 1989